# EUROPÄISCHE PATENTSCHRIFT

(11) **EP 2 094 415 B1**
(45) Veröffentlichungstag und Bekanntmachung des Hinweises auf die Patenterteilung: **06.11.2013**
(21) Anmeldenummer: 07815198.2
(22) Anmeldetag: 05.12.2007
(51) Int. Cl.: B21K 1/76, F16H 55/26, B62D 3/12

(54) **ZAHNSTANGE**
STEERING RACK
CRÉMAILLÈRE

(30) Priorität: 22.12.2006 DE 102006062241
(43) Veröffentlichungstag der Anmeldung: 02.09.2009
(73) Patentinhaber: ThyssenKrupp Presta Aktiengesellschaft, 9492 Eschen (LI)
(72) Erfinder: ECKSTEIN, Ralf, 6800 Feldkirch (AT)
(74) Vertreter: Hofmann, Ralf U.
(86) Internationale Anmeldenummer: PCT/AT2007/000546
(87) Internationale Veröffentlichungsnummer: WO 2008/077162

(56) Entgegenhaltungen:
- WO-A-2006/099661
- JP-A- 10 085 884

## Beschreibung

Die Erfindung betrifft eine Zahnstange nach dem Oberbegriff des Anspruchs 1 sowie ein Verfahren zur Herstellung einer Zahnstange nach dem Oberbegriff des Anspruchs 9.

Zahnstangen werden beispielsweise in Lenksystemen von Kraftfahrzeugen zur Umwandlung einer Drehbewegung in eine Translationsbewegung eingesetzt. Hierzu greift ein Ritzel, das beispielsweise von einem Steuerrad eines Lenksystems direkt oder indirekt angetrieben wird, in die Verzahnung einer Zahnstange ein. Durch eine Verdrehung des Ritzels wird unter Veränderung des Zahneingriffs die Zahnstange, die entsprechend gelagert ist, je nach Drehrichtung in eine ihrer Längsrichtungen verschoben. Die Zahnstange treibt dann beispielsweise Spurstangen an und bewirkt damit die Verschwenkung der Räder des Fahrzeuges.

Die Herstellung der Zahnstange, insbesondere für den Einsatz in einem Lenksystem, ist aufgrund der hohen Festigkeits- und Genauigkeitsanforderungen sehr aufwändig und teuer. Besonders wichtig ist es dabei, eine möglichst genau definierte Zahngeometrie und hohe Zahnfestigkeit zu erhalten. Im Stand der Technik gibt es eine Reihe von Verfahren, mit denen Zahnstangen durch umformende oder spannende Verfahren und entsprechende Nachbearbeitungsschritte hergestellt werden. Derartige Zahnstangen weisen aber vielfach ein hohes Gewicht und entsprechend hohe Materialkosten auf.

In der JP 11-180318 A wird ein Verfahren zur Herstellung einer hohlen Zahnstange aus einem ebenen Blech vorgestellt, bei dem in einem ersten Schritt das Blech in eine U-Form gebogen wird, wobei der Verbindungsabschnitt zwischen den beiden U-Schenkeln halbkreisförmig ausgebildet ist. Anschließend wird die Verzahnung in den Scheitel des Bogens des Verbindungsabschnitts eingepresst und die Schenkel zu einem geschlossenen Rohrprofil umgebogen.

In einer alternativen Ausführungsform der JP 11-180318 A wird die Verzahnung zunächst in das ebene Blech eingepresst. Im Anschluss daran werden die Bereiche des Blechs neben der Verzahnung zu einem geschlossenen Rohr umgebogen.

In beiden Ausführungsformen sind die Schenkel des U-Profils ungleich lang und es wird der längere der beiden Schenkel zur Bildung des geschlossenen Rohrprofils umgeformt. In beiden Ausführungsformen ist die Zahnform jedoch nicht sehr präzise herstellbar. Die Biegeoperationen bringen Spannungen in den Bereich der Verzahnung, die zu einem Verzug der Verzahnung führt. Daran ändert auch die ungleiche Schenkellänge nur wenig.

In der US 6,845,560 B2 wird ebenfalls die Herstellung einer Zahnstange aus einem ebenem Blech vorgestellt. Hier wird das Blech zu einem U-Profil mit zwei Seitenschenkeln und einem Verbindungsstück umgebogen. Im Verbindungsstück ist ein Bereich eben ausgebildet und beidseitig daran anschließend sind zwei Bereiche halbkreisförmig ausgebildet. Zusätzlich ist dieser halbkreisförmige Bereich neben dem ebenen Bereich mit größer werdendem Abstand vom ebenen Bereich mit einem ansteigenden Verlauf umgeformt. Im Anschluss an diese Umformung werden in einem zweiten Schritt die Verzahnung in den ebenen Bereich eingepresst und in einem dritten Schritt die Seitenschenkel zu einem Rohr zusammengebogen.

Auch in diesem Beispiel werden in der auf das Einpressen der Verzahnung nachfolgenden Umformung Spannungen in die Verzahnung eingebracht, die zu einem Verzug führen. Die speziell ansteigende Form des halbkreisförmigen Verbindungsabschnitts neben dem ebenen Bereich, in den die Verzahnung anschließend eingepresst wird, reicht nicht aus, derartige Spannungen zu vermeiden.

Die EP 1 123 855 schlägt zur Herstellung einer Zahnstange vor, den an der Innenfläche des hohlen Bereichs der Wandung der Zahnstange angreifenden Stempel mit seitlichen Vorsprüngen zu versehen. Diese dienen dazu, beim Umformprozess Material in den Bereich der Verzahnung zu schieben. Gemäß der US 3,163,925 ist zur Herstellung einer Zahnstange hingegen vorgesehen, dass eine Ausdünnung des Materials im Bereich der Verzahnung in Kauf genommen wird.

Die JP 10-85864 offenbart ein umfangsgeschlossenes Rohr in das eine Zahnstange mittels Rollverfahren eingebracht wird. Das Rohr wird bei diesem Vorgang mittels eines formschlüssigen Eingriffs in Längsnuten des Rohres festgehalten.

Aufgabe der Erfindung ist es, eine Zahnstange bereit zu stellen, die bei einem geringen Herstellungsaufwand eine sehr genaue Zahnform aufweist. Weiter soll ein Verfahren zur Herstellung einer Zahnstange bereitgestellt werden, bei dem bereits nach der Umformung eine sehr hohe Präzision der Verzahnung erreicht wird.

Gelöst wird die Aufgabe durch das Verfahren zur Herstellung eine Zahnstange mit den Merkmalen des Anspruchs 1 und durch eine Zahnstange mit den Merkmalen des Anspruchs 5. In den Unteransprüchen 2 bis 4 sind vorteilhafte Weiterbildungen des erfindungsgemäßen Herstellverfahrens für die Zahnstange bzw. in den Unteransprüchen 6 bis 12 der erfindungsgemäßen Zahnstange vorgestellt.

Kerngedanke der Erfindung ist dabei, dass durch entsprechend in das Blech eingebrachte Schwächungen und/oder Haltekanten die durch die nachfolgenden Umformschritte in das Blech eingebrachte Spannungsverteilung beeinflusst werden kann. So werden beispielsweise Biegespannungen über quer zur Biegelinie verlaufende Schwächungen, beispielsweise Sicken oder auch Einfräsungen, nur in geringem Umfang übertragen. Zumindest der Großteil der Spannung wird durch eine Verformung an der Schwächungsstelle abgebaut. An Haltekanten wird der Stofffluss durch den Kontakt mit dem Werkzeug behindert Entsprechend kann eine auf der einen Seite der Haltekante eingebrachte Spannung mit der daraus resultierenden Verformung nur in geringerem Umfang auf die andere Seite der Haltekante weitergeleitet werden.

Bei einer Anordnung einer derartigen Schwächungsstelle und/oder Haltekante an einem Rand eines Teilbereichs des umzuformenden Blechstücks wird demzufolge nur ein geringer Teil der Spannungen, die bei einer nachfolgenden Umformung des zum Teilbereich benachbarten, auf der anderen Seite der Schwächung bzw. Haltekante liegenden Bereiches des Blechstücks in das Werkstück eingebracht werden, in diesen Teilbereich eingeleitet. Dadurch wird weitgehend verhindert, dass in eng tolerierten Konturen, insbesondere Verzahnungen, die zuvor in den Teilbereich eingebracht worden sind, zusätzliche Spannungen und entsprechende Formänderungen durch die nachträgliche Umformung des durch die mindestens eine Schwächung und/oder Haltekante vom Teilbereich abgegrenzten Bereichs des Bleches bewirkt werden.

Dabei sei angemerkt, dass derartig präzise umgeformte Verzahnungen auch im Falle einer nachfolgenden Schleifoperation von Vorteil sind.

Der die Verzahnung aufweisende Teilbereich stellt somit einen vom Einfluss nachfolgender Umformungen möglichst unbeeinflussten Bereich dar. Zumindest entspricht der Teilbereich in seiner Ausdehnung dem Verzahnungsbereich.

Es ist bevorzugt, wenn nicht nur mindestens eine sondern alle vorhandenen Schwächungen und/oder Haltekanten von der Verzahnung beabstandet sind, also einen Abstand größer als 0 aufweisen (bezogen auf die Umfangsrichtung). Es ist dann also keine Schwächung und/oder Haltekante vorhanden, die ohne Abstand zur Verzahnung angeordnet ist bzw. innerhalb dieser bzw. unterhalb dieser (bei einer Anordnung auf der gegenüberliegenden Innenfläche der Wandung des Werkstücks) liegt.

In einer vorteilhaften Ausführungsform der Erfindung verlaufen bezogen auf die Umfangsrichtung vor und hinter dem Teilbereich bzw. der Verzahnung, also in Längsrichtung gesehen beidseitig des Teilbereichs bzw. der Verzahnung jeweils mindestens eine Schwächung und/oder Haltekante. Beispielsweise könnte beiderseits des Teilbereichs jeweils genau eine Schwächung oder Haltekante vorgesehen sein.

Zur Anordnung und Auslegung derartiger Schwächungsstellen werden vorteilhafterweise die nachfolgend geplanten Umformoperationen berücksichtigt. Hierzu können numerische Simulationen (FEM-Simulationen) herangezogen werden, in denen die Spannungsverläufe im Bauteil simuliert werden und damit können die richtige Anordnung und Auslegung der Schwächungsstellen bestimmt werden. Grundsätzlich sind die Schwächungsstellen derart auszulegen, dass die außerhalb des Teilbereiches eingebrachten Spannungen, wie insbesondere Biegespannungen, an der Schwächungsstelle abgebaut werden können. Das bedeutet, dass in der Regel die Schwächungsstellen einen zu schützenden Teilbereich teilweise oder vollständig umgrenzen.

Werden durch die Ausbildung der Schwächungen zusätzlich Absätze oder Kanten in das Werkstück eingebracht, so wird der Werkstofffluss durch die Anlage der entsprechenden Absätze oder Kanten am Werkzeug stark vermindert. Die Schwächungen bilden in diesem Fall also gleichzeitig auch Haltekanten aus. Dadurch wird zusätzlich eine Einbringung von Spannungen in den Teilbereich, der durch die Schwächungen abgegrenzt ist, weiter verringert. In einer Weiterführung der Erfindung ist demzufolge zumindest eine Haltekante als Schwächung ausgebildet.

Denkbar und möglich wäre es beispielsweise auch, Haltekanten auszubilden, die nicht gleichzeitig auch eine Schwächung darstellen. Schwächungen können gegenüber Haltekanten unter anderem dahingehend vorteilhaft sein, dass ein Kontakt mit dem Werkzeug an der Stelle der Schwächung während des Umformens nicht erforderlich ist, um unerwünschte Verformungen in dem die Verzahnung aufweisenden Teilbereich zu vermeiden. Im Fall einer Haltekante ist ein Werkzeugkontakt erforderlich.

Die mindestens eine Haltekante wird somit zur Beeinflussung von Spannungen verwendet, welche bei zur Herstellung der Zahnstange erforderlichen Prozessen auftreten.

Bei der Ausbildung einer Zahnstange aus einem Blechstück wird in einen Teilbereich eine Verzahnung als spezielle Kontur eingebracht, wobei vorzugsweise vor der Einbringung der Verzahnung schon mindestens eine vorausgehende Umformung durchgeführt worden ist. Nachfolgend wird das Blechstück in die Form der fertigen Zahnstange umgeformt, wobei die jeweilige eingebrachte Schwächung und/oder Haltekante einer weiteren unkontrollierten Verformung entgegenwirkt. Vorzugsweise ist.der Teilbereich, in dem sich die Verzahnung befindet, hierbei bezogen auf die Richtung der Biegelinie des Blechstücks bei der Biegeoperation, die zur Ausbildung der Zahnstangenform erfolgt, beidseitig von mindestens einer Schwächung und/oder Haltekante abgegrenzt, wobei diese Schwächung bzw. Haltekante quer, vorzugsweise orthogonal, zur Biegelinie verläuft.

Die Schwächungen und/oder Haltekanten sind vorzugsweise linienförmig ausgebildet. Der linienförmige Verlauf kann hierbei gradlinig sein. Auch ein Krümmungen und/oder winklig zueinander stehende Abschnitte aufweisender linienförmiger Verlauf ist denkbar und möglich. Weiters sind Unterbrechungen der Schwächungen und/oder Haltekanten im linienförmigen Verlauf denkbar und möglich.

Im Weiteren wird die Erfindung beispielhaft anhand von schematischen Figuren erläutert. Die Figuren veranschaulichen:
Figur 1 eine Ausführungsform der erfindungsgemäßen Zahnstange;
Figur 2 das Ausgangswerkstück, die ebene Blechplatine, zur Herstellung der Zahnstange;
Figur 3 eine erste Umformstufe zur Bildung der Zahnstange, im Querschnitt dargestellt;
Figur 4 eine zweite Umformstufe zur Bildung der Zahnstange, im Querschnitt dargestellt;
Figur 5 eine mögliche dritte Umformstufe zur Herstellung der Zahnstange, im Querschnitt dargestellt;
Figur 6 eine Ausführungsform der fertig umgeformten Zahnstange im Werkzeug, entsprechend der Figur 1, im Querschnitt dargestellt;
Figur 7 die halbfertige Zahnstange, entsprechend nach dem Umformschritt entsprechend der Figur 3 in isometrischer Ansicht;
Figur 8 die halbfertige Zahnstange nach dem Einprägen der Verzahnung und der Schwächungen, korrespondierend mit der Figur 4 in Seitenansicht;
Figur 9 eine Ausführungsform der erfindungsgemäßen Zahnstange, entsprechend der Figur 1 im Längsschnitt;
Figur 10 einen Ausschnitt der erfindungsgemäßen Zahnstange, entsprechend der Ausführungsform der Figur 1 in Draufsicht auf die Verzahnungsseite der Zahnstange;
Figur 11 die halbfertige Zahnstange, nach dem Umformschritt entsprechend Figur 4 in isometrischer Ansicht;
Figur 12 Ausschnitt Z aus Figur 6.

Alle Figuren dienen nur der Veranschaulichung der Erfindung. Insbesondere sind die Werkzeuggeometrien und/oder die Größenverhältnisse nur schematisch wiedergegeben.

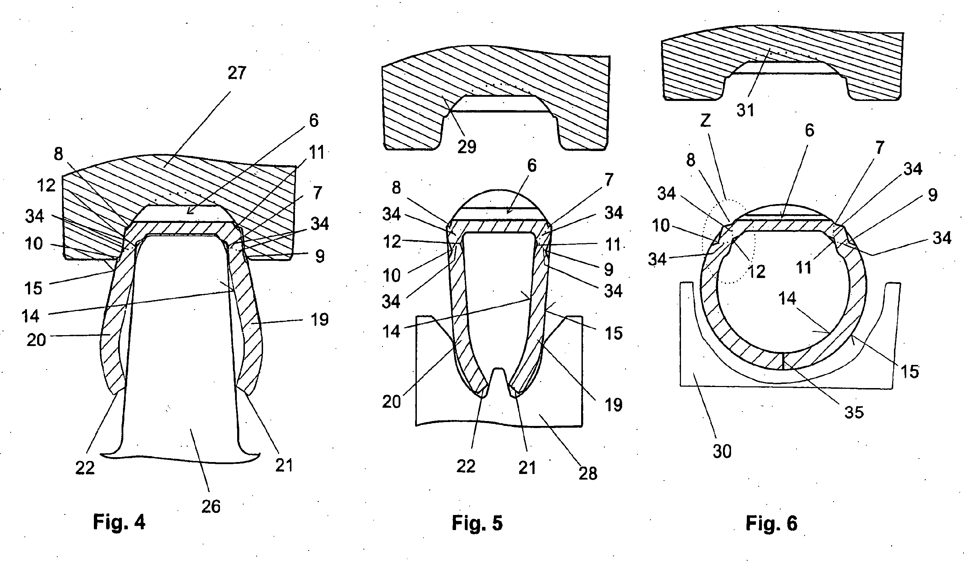

Zur besseren Übersichtlichkeit sind die Werkzeuge in den Figuren 5 und 6 auseinandergefahren und die Schnitte teilweise nicht als Schraffuren dargestellt.

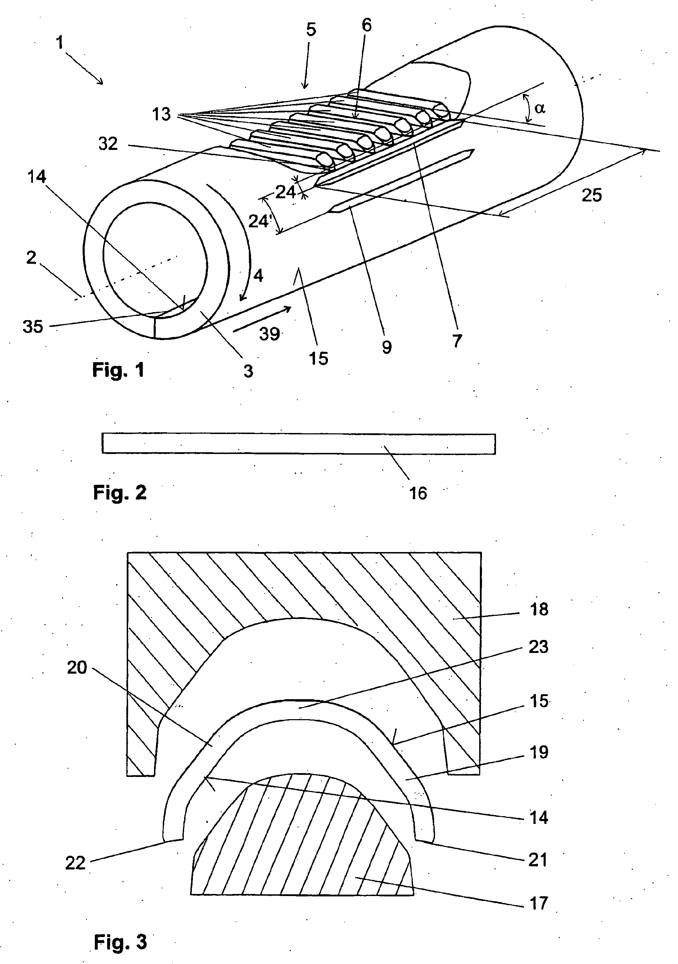

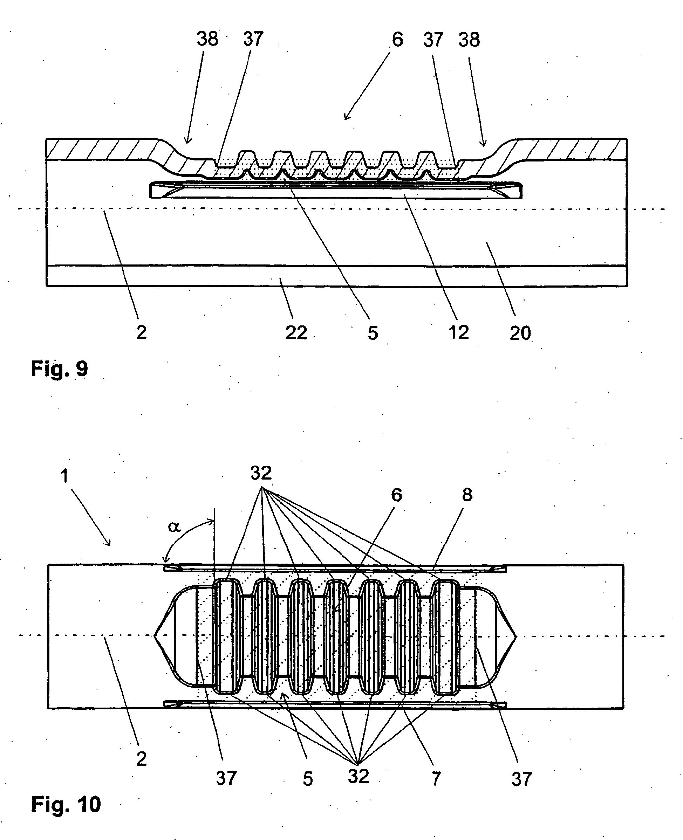

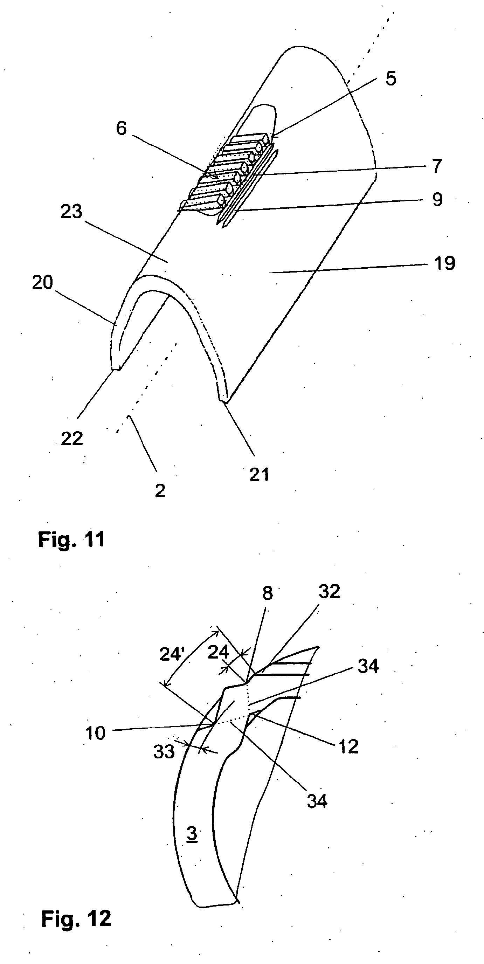

In der Figur 1 ist ein Ausschnitt einer Ausführungsform der erfindungsgemäßen Zahnstange 1 in isometrischer Ansicht dargestellt. Die Zahnstange erstreckt sich in eine Längsrichtung 39 und umfasst die Wandung 3, die die Längsachse 2 der Zahnstange 1 umschließt. In einem Teilbereich 5 ist eine Verzahnung 6 mit den Zähnen 13 eingeprägt. Der Teilbereich 5 dehnt sich zumindest über den Bereich der Verzahnung 6 aus. Bezogen auf die tangentiale Richtung bzw. Umfangsrichtung 4 ist der Teilbereich 5 durch Schwächungen 7, 8, 9, 10, 11, 12 abgegrenzt, die sich in Umfangsrichtung um einen Abstand 24 bzw. 24' beabstandet beidseitig neben der Verzahnung 6 erstrecken. Diese Schwächungen 7 - 12 erstrecken sich in der Längsrichtung 39 der Zahnstange, also parallel zur Längsachse 2, und besitzen eine Länge 25, die in etwa der Länge des verzahnten Abschnittes 6 entspricht. Wie in der Schnittdarstellung (Figur 6, 12) gut erkennbar ist, ist die Wandstärke der Wandung 3 an den Schwächungsstellen 7, 8, 9, 10, 11, 12 gegenüber der Ausgangswandstärke bzw. der Wandstärke in der Umgebung dünner ausgebildet. Im Ausführungsbeispiel verlaufen die Zähne geradlinig und unter einem Winkel von a= 90° sowohl zur Längsachse 2 als auch zur Richtung der Schwächungsstellen 7, 8, 9, 10, 11, 12 (siehe Figur 10). Die Erfindung umfasst jedoch auch anders geartete Verzahnungen, bei denen beispielsweise der Winkel der Zahnrichtung in Bezug zur Längsrichtung 2 im Bereich zwischen 30 und 90° liegt. Dabei können die Verzahnungen beliebig ausgebildet sein beispielsweise als schraubenförmige Verzahnung oder als Verzahnung mit variabler Teilung.

Im gezeigten Ausführungsbeispiel sind an der Außenfläche 15 und an der Innenfläche 14 Schwächungen 7 - 12 ausgebildet. Denkbar und möglich ist es auch, Schwächungen nur an der Außenfläche 15 oder nur an der Innenfläche 14 der Wandung 3 vorzusehen.

In den Figuren 9 und 10 ist die Ausführungsform der erfindungsgemäßen Zahnstange 1 im Längsschnitt (Fig. 9) und in einer Draufsicht auf die Verzahnung (Fig. 10) veranschaulicht. Insbesondere anhand der Figuren 9 und 10 ist erkennbar, dass im Beispiel der Teilbereich 5 in Längsrichtung 2 zusätzlich durch die Haltekanten 37, und Bögen 38, die auch als Haltekanten dienen, abgegrenzt ist. Wie im Beispiel zu erkennen ist, muss dabei die Abgrenzung durch die Schwächungsstellen und/oder Haltekanten nicht ohne Unterbruch erfolgen. Es ist ohne weiteres denkbar und möglich Lücken in den Abschnitten der Schwächungen und/oder Haltekanten vorzusehen. Die Begrenzung des Teilbereiches 5, in den die Verzahnung 6 eingebracht ist, in Längsrichtung erhöht zwar die Qualität, ist jedoch aufgrund der Richtung der Verzahnung und der im Fertigungsprozess notwendigen Umformschritte nicht unbedingt erforderlich, da über diesen Weg nur ein geringer Anteil Spannungen in den Teilbereich 5 von außerhalb eingebracht wird.

Durch die Biegung des Werkstücks quer zur Längsrichtung 2 wird der größte Teil der Spannungen in Umfangsrichtung 4 in das Werkstück eingebracht. Daher sind die Schwächungen 7 - 12, die den Teilbereich 5 bezogen auf die Umfangsrichtung 4 abgrenzen, vorgesehen, um eine Übertragung der Spannungen in den Teilbereich 5 zu reduzieren. Es ist dabei zu bevorzugen, wenn die Länge 25 der Schwächungen 7 - 12, zumindest der Länge des Teilbereiches 5, also zumindest der Länge der Verzahnung 6, in Längsrichtung 2 gemessen entspricht. Dabei ist es durchaus möglich die Schwächungen 7, 8, 9, 10, 11, 12 mit Unterbrechungen entlang ihrer Länge auszubilden. Bevorzugt ist die Schwächung als eingepresst durchgehende Nut ausgebildet, wobei ihre Länge 25 der Länge des Teilbereiches 5 bzw. der Verzahnung 6 in Längsrichtung 2 entspricht oder diese um bis zu 5% beidseitig überragt. Die Tiefe 33 der eingeprägten Nut beträgt im bevorzugten Fall 1 /4 bis 1 /3 der Wandstärke der Wandung 3 (siehe hierzu auch Fig. 12). Für den Fall, dass sowohl an der Innenfläche 14 als auch an der Außenfläche 15 der Wandung 3 Einprägungen als Schwächung vorgesehen sind, kann die Tiefe der Nut noch herabgesetzt werden. Die Tiefe 33 beträgt dann vorzugsweise zumindest 1/6 der Wandstärke der Wandung 3. Prägetiefen, die größer als die Hälfte der Wandstärke betragen, sollten vermieden werden. Alternativ ist auch an diesen Längsseiten des Teilbereiches 5 der Einsatz von Haltekanten denkbar und möglich, wobei festzustellen bleibt, dass die im Beispiel dargestellten eingeprägten Nuten bereits zusätzlich zur Wirkung als Schwächung auch als Haltekante wirken, wenn die Nuten bei der nachfolgenden Umformung in Kontakt mit dem Werkzeug stehen.

Der Abstand 24, 24' der Mittellinien der Schwächungen und/oder Haltekanten 7, 8, 9, 10, 11, 12 von dem Auslauf 32 der Verzahnung 6 in Umfangsrichtung 4 beträgt dabei im bevorzugten Fall zumindest 1/3 der Wandstärke der Wandung 3. Im Falle, dass zwei parallel verlaufende Schwächungen und/oder Haltekanten 7, 8, 9, 10 auf jeder Seite der Verzahnung in der Außenfläche 15 der Wandung 3 vorgesehen sind, liegt der Abstand 24 vom Zahnauslauf 32 bis zur ersten Schwächung und/oder Haltekante in Umfangsrichtung 4 im bevorzugten Fall etwa im Bereich von 1/3 des Betrages der Wandstärke der Wandung 3 bis zum ganzen Betrag der Wandstärke der Wandung 3. Der Abstand 24' vom Zahnauslauf 32 bis zur zweiten Schwächung und/oder Haltekante in Umfangsrichtung 4 liegt im bevorzugten Fall etwa im Bereich von 2/3 des Betrages der Wandstärke der Wandung 3 bis zum doppelten Betrag der Wandstärke der Wandung 3. Falls zusätzlich noch eine weitere Schwächung 11, 12 auf der Innenfläche 14 der Wandung 3 beidseits der Verzahnung vorgesehen sind, so wird diese vorzugsweise in Umfangsrichtung 4 zwischen den beiden außen angeordneten Schwächungen und/oder Haltekanten 7, 8, 9, 10 angeordnet.

Je nach Wandstärke der Wandung 3 und den Umformschritten ist die Anzahl der Schwächungsstellen und/oder Haltekanten und ihre Lage an der Innenfläche 14 oder Außenfläche 15, der Wandung 3 festzulegen. Dabei ist eine Anordnung von Haltekanten nur an der Außenfläche 15 der Wandung 3 zu bevorzugen, da es nur während der ersten Umformstufen einfach möglich ist, einen Werkzeugkontakt zwischen Haltekante und Werkzeuggravur zu erreichen. Je nach Lage der Schweissnaht 35 in Umfangsrichtung kann es sogar genügen nur eine einzige Schwächung und/oder Haltekante vorzusehen. Da in der Regel jedoch die Zahnstange sehr hohen Belastungen standhalten muss, wird in der Regel die Wandstärke der Wandung 3 relativ dick sein müssen. Entsprechend werden bevorzugt auf jeder Seite des Teilbereiches drei Schwächungen, jeweils zwei an der Außenfläche 15 und eine an der Innenfläche 14 der Wandung 3, in das Werkstück eingebracht. Die beiden Schwächungen 7, 8 an der Aussenfläche 15, die am dichtesten am Teilbereich angeordnet sind, sind dabei gleichzeitig als Haltekanten ausgelegt. Die geometrische Gestaltung der Schwächungen ist vorzugsweise so auszuführen, dass eine Entnahme des Werkstücks nach dem Umformen der Verzahnung nicht durch Hinterschneidungen behindert wird.

Schwächungen und/oder Haltekanten, die den Teilbereich 5 in Umfangsrichtung 4 abgrenzen, könnten auch winkelig zur Längsrichtung 39 verlaufen, vorzugsweise in einem Winkel von weniger als 45° zur Längsrichtung 39.

Die Verfahrensfolge zur Herstellung der Zahnstange aus einem ebenen Blech 16 ist in den Figuren 2, 3, 4, 5 und 6 beispielhaft in ihren Hauptschritten veranschaulicht.

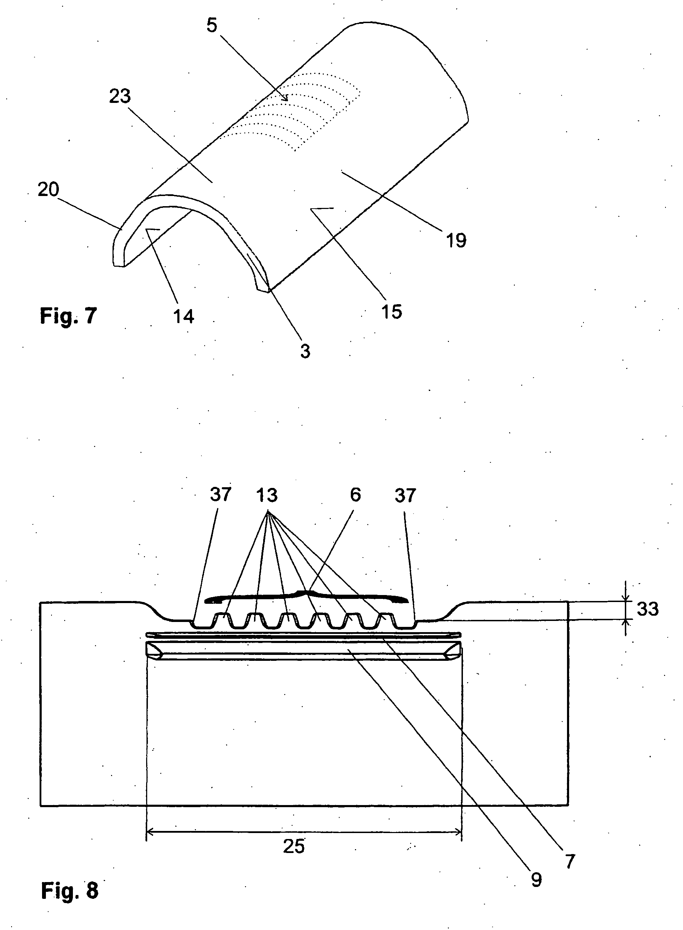

In einem ersten Schritt (Fig. 3) wird das ebene Blech in einem Umformwerkzeug, bestehend aus Stempel 17 und Matrize 18, in eine halbschalenförmige bzw. U-förmige Form, umfassend zwei Schenkel 19, 20 mit zwei Enden 21, 22 und einem Verbindungsabschnitt 23 der zwischen den beiden Schenkeln 19, 20 angeordnet ist, umgeformt. Im bevorzugten Fall sind die beiden Schenkel 19, 20 nicht parallel zueinander, sondern in Richtung weg vom Verbindungsabschnitt 23 sich öffnend ausgerichtet. Die Wandung 3 des Werkstück umfasst nach der Umformung eine konkave Fläche (=Innenfläche 14) und eine konvexe Fläche (=Außenfläche 15). Zur Verbesserung der Ausbildung einer kreisrunden Endform der Zahnstange 1, sind die Endstücke der beiden Schenkel 19, 20 nach der Umformung etwas abgewinkelt, derart, dass die Ebenen auf denen die beiden Schenkelenden 20, 21 liegen, sich innerhalb des vom Verbindungsabschnitt 23 und von den Schenkeln 19, 20 teilweise umschlossenen Raumes schneiden. Es ist dabei unerheblich, ob die Abwinklung der beiden Schenkelenden 20, 21 in einem vorausgehenden Umformschritt oder integriert in diesen ersten Schritt, wie er in Fig. 3 veranschaulicht ist, erfolgt ist. In der Figur 7 ist das Werkstück nach dem ersten Umformschritt in isometrischer Darstellung veranschaulicht. Der Teilbereich 5, in dem in den späteren Umformschritten die Verzahnung 6 eingebracht wird, ist durch die gestrichelten Linien gekennzeichnet.

Durch die Ausrichtung der Schenkel 19, 20 wird eine gute Zugänglichkeit von Umformwerkzeugen für nachfolgende Umformoperationen gewährleistet.

Die Figur 4 veranschaulicht einen zweiten und dritten Umformschritt zur Einbringung der Schwächungen 7 - 12 und der Verzahnung 6. In der bevorzugten Verfahrensfolge erfolgen der zweite und dritte Umformschritt in einen Umformschritt zusammengefasst gleichzeitig in einem Umformwerkzeug. In diesem Umformschritt werden in einem weiteren Umformwerkzeug, bestehend aus Stempel 26 und Matrize 27, die Schwächungen 7, 8, 9, 10 an der Außenfläche der Wandung 3, die Schwächungen 11, 12 an der Innenseite der Wandung 3 und die Verzahnung 6 in das Bauteil eingepresst. Die geöffnete nichtparallele Ausrichtung der beiden Schenkel 19, 20 erleichtert das Einfahren des Stempels 26 an die Innenfläche 14, was einerseits die Ausformung der Verzahnung erleichtert und andererseits die Einformung der Schwächungen 11, 12 an der Innenfläche 14 der Wandung 3 ermöglicht. Insbesondere kann der Stempel 26 nach der Umformung ohne Beschädigung der Innenfläche 14 und der Schenkelenden 21, 22 aus dem Werkstück herausgefahren werden. In der Matrize 27 sind zumindest die entsprechenden Negativ-Konturen für die Schwächungen und die Verzahnung 6 ausgebildet. Im Stempel 26 sind die Negativ-Konturen für die Schwächungen und für die Innenfläche im Bereich der Verzahnung 6 ausgebildet. Die Innenfläche im Bereich der Verzahnung 6 wird dabei nach umformtechnischen Gesichtspunkten derart ausgelegt, dass die Verzahnung 6 in möglichst guter Qualität ausgebildet wird. Als Qualitätsmassstab dient dabei insbesondere die Formabweichung und die Eigenspannungen im Werkstück. Beispielhaft hierfür ist die Innenkontur im Bereich der Verzahnung 6, wie sie in der Figur 9 dargestellt ist.

Zur Ausbildung von mindestens einer Schwächung 11, 12 an der Innenfläche 14 der Wandung 3 (im Ausführungsbeispiel sind es zwei Schwächungen 11, 12) können im Stempel 26 entsprechenden Formelemente, wie Kanten, vorgesehen sein. Mindestens eines dieser Formelemente, vorzugsweise alle, ist in Umfangsrichtung gesehen im Abstand zur Verzahnung angeordnet, liegt also nicht unterhalb derselben.

In der Figur 11 ist das umgeformte Werkstück, entsprechend der gleichen Zwischenstufe der Umformfolge, wie in Figur 4 veranschaulicht, in isometrischer Darstellung veranschaulicht. Die Schwächungen 7, 9, begrenzen den Teilbereich 5, in dem die Verzahnung 6 eingebracht ist.

In der Figur 8 ist das Werkstück nach dem erfolgten zweiten und dritten Umformschritt in Seitenansicht dargestellt.

Es ist denkbar und möglich den im Ausführungsbeispiel zusammengefassten zweiten und dritten Umformschritt in zwei oder mehr Teilschritte zu zerlegen, bei denen erst die Schwächungen und anschließend die Verzahnung eingeformt wird. Alternativ kann auch zunächst die Verzahnung und anschließend die Schwächung in das Werkstück eingebracht werden. Denkbar und möglich ist es ebenso, in einem ersten Schritt einige der Schwächungen einzubringen und im Anschluss daran die Verzahnung und daran anschließend die restlichen Schwächungen in das Werkstück einzubringen. Es können alternativ auch weniger Schwächungen in das Werkstück eingebracht werden. Die Schwächungen können auch auf andere Art und Weise als Pressen hergestellt werden. Beispielsweise können die Schwächungen durch ein Roll- oder Walzverfahren eingebracht sein.

Im nächsten Umformschritt (Fig. 5) werden die beiden Schenkel 19, 20 weiter geschlossen. Hierzu wird das Werkstück zwischen die Umformwerkzeuge 29, 30 eingelegt, die entsprechend zur Umformung geschlossen werden. Wichtig ist dabei, dass die Obermatrize 29 zumindest die Negativ-Kontur der Verzahnung besitzt. Im Verlaufe der Umformung erfolgt eine erleichterte Biegung entlang der Knicklinien 34, die durch die Schwächungen 7, 8, 9, 10, 11, 12 in der Wandung 3 des Werkstücks ausgebildet sind. Die Umformspannungen, die zur Umformung der beiden Schenkel führen, können auf diese Weise nur in sehr geringem Ausmaß oder überhaupt nicht im Bereich der Verzahnung 6 eine plastische Formänderung bewirken. Geringe Reste der Umformspannungen werden durch die Reibung im Umformwerkzeug 29, das die Negativ-Kontur der Verzahnung trägt abgestützt. Dadurch kann eine weitere Umformung der Verzahnung weitgehend vermieden werden.

Die Figur 6 veranschaulicht den letzten Umformschritt, bei dem die beiden Schenkel 19, 20 in die endgültige Form der Zahnstange 1 umgeformt werden. Nach erfolgter Umformung stehen die beiden Schenkelenden 21, 22, abgesehen von einer möglichen kleinen elastischen Rückfederung, miteinander in Kontakt, der durch die im ersten Umformschritt vorzugsweise ausgebildete Abwinkelung nahezu vollflächig ist. Nachfolgend können die Schenkelenden 21, 22, bevorzugt schweisstechnisch, miteinander verbunden werden (hier nicht dargestellt). Neben dem Zusammenführen der beiden Schenkelenden 21, 22 erfolgt im letzten Umformschritt auch die endgültige Ausformung der beiden Schenkel 19, 20 in eine Kreisabschnittsform. Auch in diesem Schritt reduzieren die, durch die Schwächungen gebildeten, Knicklinien 34, das Eindringen der Umformspannungen in den Bereich der Verzahnung. Auch in diesem Schritt ist in der Obermatrize 31 die Negativ-Kontur der Verzahnung ausgebildet. Darüberhinaus sind in der Obermatrize 31 und der Untermatrize 30 die Negativ-Kontur der fertigen Zahnstange im wesentlichen ausgebildet. Die Einschränkung im wesentlichen betrifft dabei eine eventuelle Abweichung von der Endkontur zum Vorhalten eventuell vorhandener Rückfederungen und/oder entsprechende Materialzugaben für anschließende mechanische Bearbeitungen der Zahnstange.

Es ist offensichtlich, dass bei diesem Zusammenbiegen ein Werkzeugkontakt an der Innenfläche 14 der Wandung 3 der Zahnstange 1 im Bereich der Verzahnung 6 nicht mehr einfach möglich ist und im gezeigten Ausführungsbeispiel auch nicht durchgeführt wird.

Wie im Beispiel dargestellt, liegt die von der Längsachse 2 weggerichtete Fläche der Verzahnung 6 während der auf die Einbringung der Verzahnung 6 bis zum Zusammenbiegen der Enden 21, 22 der Seitenschenkel 19, 20 folgenden Umformschritte in der Werkzeuggravur an. Es kann jedoch aus Gründen der Fertigungsfolge erforderlich sein, diesen Werkzeugkontakt nicht in allen folgenden Umformstufen aufrecht zu erhalten. Das ist jedoch mit Nachteilen verbunden und daher ist diese Verfahrensfolge möglichst zu vermeiden, auch wenn sie von der Erfindung mit umfasst ist.

Es ist offensichtlich, dass die beiden, in den Figuren 5 und 6 veranschaulichten, vorgenannten Umformschritte zu einem einzigen Umformschritt zusammengefasst werden können. Dies wäre dann der vierte Umformschritt bzw. der dritte Umformschritt, wenn der genannte zweite und dritte Umformschritt wie erwähnt in einem einzigen Umformschritt zusammengefasst werden.

Die Aufteilung oder Zusammenlegung der oben einzeln dargestellten Umformschritte erfolgt nach den für den Fachmann bekannten Techniken der Methodenplanung. Dabei ist es stets das Ziel, möglichst viele Umformschritte zusammenzufassen und in einem Prozessschritt in einem Werkzeug durchzuführen.

Ein Beispiel für ein Verfahren gemäß der,Erfindung ist dadurch gekennzeichnet, dass es mindestens folgende Schritte umfasst:
○ in einem ersten Fertigungsschritt das ebene Blech in einem ersten Umformwerkzeug 17, 18 in eine Halbschalen-Form oder U-Form, umfassend zwei Schenkel 19, 20 mit zwei Enden 21, 22, die den Enden 21, 22 gegenüberliegend durch einen Verbindungsabschnitt 23 miteinander verbunden sind, umgeformt wird,
○ in einem zweiten Umformschritt eine oder mehrere Schwächungen 7, 8, 9, 10, 11, 12 und/oder Haltekanten, in tangentialer Richtung 4 vom Teilbereich 5 der Wandung 3, der in einem Bereich des Verbindungsabschnittes 23 angeordnet ist, beabstandet, in Längsrichtung 2 mindestens entlang eines Teils der Länge 25 des Teilbereichs 5 verlaufend, eingeformt werden,
○ in einem dritten Umformschritt in den Teilbereich 5 die Verzahnung 6 eingepresst wird und danach
○ in einem oder mehreren nachfolgenden Umformschritten die Enden 21, 22 der beiden Schenkel 19, 20 unter Ausbildung eines sich in Richtung der Längsachse erstreckenden Hohlraums zusammengebogen werden.

Ein weiteres Beispiel für ein Verfahren gemäß der Erfindung ist dadurch gekennzeichnet, dass es mindestens folgende Schritte umfasst:
○ in einem ersten Fertigungsschritt das ebene Blech in einem ersten Umformwerkzeug 17, 18 in eine Halbschalen-Form oder U-Form, umfassend zwei Schenkel 19, 20 mit zwei Enden 21, 22, die den Enden 21, 22 gegenüberliegend durch einen Verbindungsabschnitt 23 miteinander verbunden sind, umgeformt wird,
○ in einem zweiten Umformschritt in den Teilbereich 5 die Verzahnung 6 eingepresst wird und
○ in einem dritten Umformschritt eine oder mehrere Schwächungen 7, 8, 9, 10, 11, 12, und/oder Haltekanten in tangentialer Richtung 4 vom Teilbereich der Wandung 3, der in einem Bereich des Verbindungsabschnittes 23 angeordnet ist, beabstandet, in Längsrichtung 2 mindestens entlang eines Teils der Länge 25 des Teilbereichs 5 verlaufend, eingeformt wird und danach
○ in einem oder mehreren nachfolgenden Umformschritten die Enden 21, 22 der beiden Schenkel 19, 20 unter Ausbildung eines sich in Längsachse erstreckenden Hohlraums zusammengebogen werden.

Die Ausformung der Verzahnung und die Erzeugung der Schwächungen oder Haltekanten kann in diesem Ausführungsbeispiel gemeinsam in einem einzigen Umformschritt in einem Umformwerkzeug erfolgen.

Ein weiteres Beispiel für ein Verfahren gemäß der Erfindung ist dadurch gekennzeichnet, dass es mindestens folgende Schritte umfasst:
○ in einem ersten Schritt eine oder mehrere Schwächungen 7, 8, 9, 10, 11, 12 und/oder Haltekanten, die einen Teilbereich 5 des ebenen Blechs 16 begrenzen eingebracht werden,
○ in einem weiteren Fertigungsschritt das ebene Blech in einem ersten Umformwerkzeug 17, 18 in eine Halbschalen-Form oder U-Form, umfassend zwei Schenkel 19, 20 mit zwei Enden 21, 22, die den Enden 21, 22 gegenüberliegend durch einen Verbindungsabschnitt 23 miteinander verbunden sind, umgeformt wird,
○ in einem weiteren Umformschritt, der vor der Ausbildung der U-Form, nach der Ausbildung der U-Form oder gemeinsam mit der Ausbildung der U-Form erfolgt, in den Teilbereich 5 die Verzahnung 6 eingepresst wird und danach
○ in einem oder mehreren nachfolgenden Umformschritten die Enden 21, 22 der beiden Schenkel 19, 20 unter Ausbildung eines sich in Richtung der Längsachse erstreckenden Hohlraums zusammengebogen werden.

Die Schwächungen sind in den in den Figuren veranschaulichten Beispielen als eingeprägte Nuten ausgebildet. Es ist alternativ denkbar und möglich die Schwächungen als Sicken, die gerollt oder gepresst sein können auszulegen. Ebenso können die Schwächungen und/oder Haltekanten durch ein spanendes Verfahren, beispielsweise Fräsen, erzeugt sein. Es ist jedoch auch denkbar und möglich die Schwächungen als Durchbrüche auszulegen. Weiter können auch Bereiche des Werkstücks weichgeglüht werden, um eine derartige Schwächung zu erreichen.

In einer alternativen Ausführungsform der Erfindung werden die Schwächungen und/oder Haltekanten bereits in das Ausgangswerkstück, das ebene Blech 16, eingebracht. Dies kann in einfacher Weise durch eine Prägeoperation gleichzeitig mit dem Ausschneiden der Blechstücke 16 von einem Coil erfolgen. Es ist sogar denkbar und möglich die Schwächungen und/oder Haltekanten bereits beim Walzen des Blechstreifens, aus dem die Blechstücke 16 gestanzt werden, einzubringen. Im Verlaufe der übrigen Schritte des Verfahrensablaufs brauchen dann entsprechend keine zusätzlichen Schwächungen und/oder Haltekanten eingebracht werden.

Eine Zahnstange gemäß der Erfindung kann insgesamt hohl ausgebildet sein oder sie kann einen hohlen Abschnitt umfassen, wie er beispielsweise in Fig. 1 dargestellt ist, an welchem einseitig oder beidseitig weitere, beispielsweise massive Teile angebracht sind, z. B. angeschweißt sind.

Der hohle Abschnitt der Verzahnung kann außer der gezeigten im Wesentlichen (abgesehen von dem Verzahnungsbereich) kreisringförmigen Querschnittskontur auch andere Querschnittskonturen aufweisen, beispielsweise eine quadratische oder dreiecksförmige Querschnittskontur.

Denkbar und möglich wäre es auch, mehrere Teilbereiche 5 an der Zahnstange 1 vorzusehen, die an verschiedenen Positionen in Umfangsrichtung 4 und/oder an verschiedenen Positionen in Längsrichtung 39 in der Wandung 3 der Zahnstange 1 ausgebildet sind, wobei die Teilbereiche 5 entsprechend der Erfindung durch Schwächungen und/oder Haltekanten abgegrenzt sind. Dabei können die verschiedenen Teilbereiche 5 Verzahnungen 6 und/oder andere Formelemente, wie beispielsweise Funktionsflächen für die Lagerung der Zahnstange im Druckstück des Lenksystems, aufweisen.

### Legende

### zu den Hinweisziffern

| | | | |
|---|---|---|---|
| 1 | Zahnstange | 32 | Zahnauslauf |
| 2 | Längsachse | 33 | Prägetiefe |
| 3 | Wandung | 34 | Knicklinie |
| 4 | Umfangsrichtung | 35 | Schweissnaht |
| 5 | Teilbereich | 36 | Knicklinie |
| 6 | Verzahnung | 37 | Haltekante |
| 7 | Schwächung | 38 | Bogen |
| 8 | Schwächung | 39 | Längsrichtung |
| 9 | Schwächung | α | Winkel |
| 10 | Schwächung | | |
| 11 | Schwächung | | |
| 12 | Schwächung | | |
| 13 | Zahn | | |
| 14 | Innenfläche | | |
| 15 | Außenfläche | | |
| 16 | ebenes Blech | | |
| 17 | Umformwerkzeug, Stempel | | |
| 18 | Umformwerkzeug, Matrize | | |
| 19 | Schenkel | | |
| 20 | Schenkel | | |
| 21 | Schenkelende | | |
| 22 | Schenkelende | | |
| 23 | Verbindungsabschnitt | | |
| 24 | Abstand | | |
| 24' | Abstand | | |
| 25 | Länge | | |
| 26 | Umformwerkzeug, Stempel | | |
| 27 | Umformwerkzeug, Matrize | | |
| 28 | Umformwerkzeug | | |
| 29 | Umformwerkzeug | | |
| 20 | Umformwerkzeug | | |
| 31 | Umformwerkzeug | | |

## Patentansprüche

1. Verfahren zur Herstellung eines hohlen Abschnitts einer Zahnstange (1) oder einer hohlen Zahnstange (1), wobei sich eine Längsachse (2) des hohlen Abschnitts der Zahnstange (1) parallel zu einer Längsrichtung (39) erstreckt und der hohle Abschnitt der Zahnstange (1) eine Wandung (3) umfasst, die die Längsachse (2) der Zahnstange (1) in einer Umfangsrichtung (4) umschließt und in mindestens einem Teilbereich (5) eine Verzahnung (6) aufweist, wobei in das Blech (16) eine oder mehrere Schwächungen (7, 8, 9, 10, 11, 12) und /oder Haltekanten in Umfangsrichtung von der bereits eingebrachten oder noch einzubringenden Verzahnung (6) beabstandet eingeformt werden, die sich bezogen auf die Längsrichtung (39) der Zahnstange zumindest über einen Teil der Länge der bereits eingebrachten oder noch einzubringenden Verzahnung (6) neben dieser erstrecken, **dadurch gekennzeichnet, dass** der hohle Abschnitt der Zahnstange (1) oder die hohle Zahnstange (1) aus einem ebenen Blech (16) hergestellt wird, wobei:
o das ebene Blech (16) in einem ersten Umformwerkzeug (17, 18) in eine Halbschalenform oder U-Form, umfassend zwei Schenkel (19, 20), die durch einen Verbindungsabschnitt (23) miteinander verbunden sind und jeweils ein vom Verbindungsabschnitt abgelegenes Ende (21, 22) aufweisen, umgeformt wird,
o danach, gleichzeitig oder zuvor die Verzahnung (6) in das Blech (16) eingepresst wird und
o nach der Umformung des ebenen Blechs (16) in einem ersten Umformwerkzeug (17,18) in eine Halbschalenform oder U-Form und nach dem Einpressen der Verzahnung (6) in das Blech (16) und dem Einformen der einen oder mehreren Schwächungen (7, 8, 9, 10, 11, 12) und/oder Haltekanten in das Blech (16) in einem oder mehreren nachfolgenden Umformschritten die Enden (21, 22) der beiden Schenkel (19, 20) unter Ausbildung eines sich in Richtung der Längsachse (2) erstreckenden Hohlraums zusammengebogen werden.

2. Verfahren nach Anspruch 1, **dadurch gekennzeichnet, dass** eine oder mehrere der Schwächungen (7 -12) und/oder Haltekanten vor mindestens einem nachfolgenden Umformschritt, in welchem die Enden (21, 22) der beiden Schenkel (19, 20) unter Ausbildung eines sich in Richtung der Längsachse (2) erstreckenden Hohlraums zusammengebogen werden, und gleichzeitig mit der Einpressung der Verzahnung (6) oder vor dieser eingeformt werden.

3. Verfahren nach Anspruch 1 oder 2, **dadurch gekennzeichnet, dass** eine oder mehrere der Schwächungen (7 - 12) und/oder Haltekanten in das ebene Blech eingeformt werden.

4. Verfahren nach einem der Ansprüche 1 bis 3, **dadurch gekennzeichnet, dass** nach Abschluss der Umformoperationen die beiden Enden (21, 22) der Schenkel durch Schweißen verbunden werden.

5. Zahnstange (1), die zumindest abschnittsweise hohl ausgebildet ist und deren Längsachse sich parallel zu einer Längsrichtung (39) erstreckt und die in ihrem hohlen Bereich eine Wandung (3) umfasst, die die Längsachse (2) der Zahnstange (1) in einer Umfangsrichtung (4) umschließt und in mindestens einem Teilbereich (5) eine Verzahnung (6) aufweist, wobei in Umfangsrichtung (4) von der Verzahnung (6) beabstandet mindestens eine lokale Schwächung (7, 8, 9, 10, 11, 12) und/oder Haltekante in der Wandung (3) ausgebildet ist, die sich bezogen auf die Längsrichtung (39) der Zahnstange (1) zumindest über einen Teil der Länge der Verzahnung (6) neben dieser erstreckt, **dadurch gekennzeichnet, dass** der hohle Bereich der Zahnstange (1) oder die hohle Zahnstange (1) aus einem ebenen Blech (16) hergestellt ist und die Verzahnung (6) in das Blech (16) eingepresst ist, hergestellt gemäß dem Verfahren nach einem der Ansprüche 1 bis 4.

6. Zahnstange nach Anspruch 5, **dadurch gekennzeichnet, dass** beiderseits der Verzahnung (6) zumindest eine Schwächung (7, 8) oder Haltekante vorgesehen ist.

7. Zahnstange nach einem der Ansprüche 5 bis 6, **dadurch gekennzeichnet, dass** mindestens eine Schwächung (7, 8, 9, 10, 11, 12) und/oder Haltekante parallel zur Längsachse (2) ausgerichtet ist.

8. Zahnstange nach einem der Ansprüche 5 bis 7, **dadurch gekennzeichnet dass** die Zähne (13) der Verzahnung unter einem Winkel (α), dessen Wert größer als 30° ist, zur Längsachse (2) der Zahnstange (1), ausgerichtet sind.

9. Zahnstange nach einem der Ansprüche 5 bis 8, **dadurch gekennzeichnet, dass** die Zähne (13) der Verzahnung (6) unter einem Winkel (α), dessen Wert größer als 30° ist, zu mindestens einer Schwächung (7, 8, 9, 10, 11, 12) oder Haltekante ausgerichtet sind.

10. Zahnstange nach einem der Ansprüche 5 bis 9, **dadurch gekennzeichnet, dass** mindestens eine Schwächung (7, 8, 9, 10, 11, 12) oder Haltekante an der Innenfläche (14) der Wandung (3) angeordnet ist.

11. Zahnstange nach einem der Ansprüche 5 bis 10, **dadurch gekennzeichnet, dass** mindestens eine Schwächung (7, 8, 9, 10, 11, 12) oder Haltekante an der Außenfläche (15) der Wandung angeordnet ist.

12. Zahnstange nach Anspruch 11, **dadurch gekennzeichnet, dass** an der Außenfläche (15) der Wandung (3) beidseitig der Verzahnung (6) jeweils zwei Schwächungen (7, 8, 9 , 10) angeordnet sind.

## Claims

1. Method for the production of a hollow section of a toothed rack (1) or of a hollow toothed rack (1), wherein a longitudinal axis (2) of the hollow section of the toothed rack (1) extends parallel to a longitudinal direction (39) and the hollow section of the toothed rack (1) comprises a wall (3) which encompasses the longitudinal axis (2) of the toothed rack (1) in a circumferential direction (4) and in at least a subregion (5) has a toothing (6), wherein into the metal sheet (16) one or more weakenings (7, 8, 9, 10, 11, 12) and/or holding edges are formed spaced apart in the circumferential direction from the already incorporated or still to be incorporated toothing (6), which, with reference to the longitudinal direction (39) of the toothed rack, extend at least over a portion of the length of the already incorporated or still to be incorporated toothing (6), next to the latter, **characterised in that** the hollow section of the toothed rack (1) or the hollow toothed rack (1) is produced from a planar metal sheet (16), wherein:
o the planar metal sheet (16) is formed in a first forming die (17, 18) into a half-shell shape or U-ahape, comprising two limbs (19, 20) which are connected with one another by a connecting section (23) and each have an end (21, 22) remote from the connecting section,
o subsequently, simultaneously or previously the toothing (6) is impressed into the metal sheet (16), and
o after the forming of the planar metal sheet (16) in a first forming die (17, 18) into a half-shell shape or U-shape and after the impressing of the toothing (6) into the metal sheet (16) and the forming of the one or more weakenings (7, 8, 9, 10, 11, 12) and/or holding edges into the metal sheet (16), in one or more subsequent forming steps the ends (21, 22) of the two limbs (19, 20) are bent together to form a hollow space extending in the direction of the longitudinal axis (2).

2. Method according to Claim 1, **characterised in that** one or more of the weakenings (7 - 12) and/or holding edges are formed in, before at least one subsequent forming step in which the ends (21, 22) of the two limbs (19, 20) are bent together to form a hollow space extending in the direction of the longitudinal axis (2), and simultaneously with the impressing of the toothing (6) or before it.

3. Method according to Claim 1 or 2, **characterised in that** one or more of the weakenings (7 - 12) and/or holding edges are formed into the planar metal sheet.

4. Method according to one of Claims 1 to 3, **characterised in that** after the completion of the forming operations the two ends (21, 22) of the limbs are connected by welding.

5. Toothed rack (1) which at least in sections is hollow and whose longitudinal axis extends parallel to a longitudinal direction (39) and which in its hollow region comprises a wall (3) which encompasses the longitudinal axis (2) of the toothed rack (1) in a circumferential direction (4) and in at least a subregion (5) has a toothing (6), wherein in the circumferential direction (4) spaced apart from the toothing (6) is formed at least one local weakening (7, 8, 9, 10, 11, 12) and/or holding edge in the wall (3), which, with reference to the longitudinal direction (39) of the toothed rack (1), extends at least over a portion of the length of the toothing (6), next to the latter, **characterised in that** the hollow region of the toothed rack (1) or the hollow toothed rack (1) is produced from a planar metal sheet (16) and the toothing (6) is impressed into the sheet metal (16), produced in accordance with the method according to one of Claims 1 to 4.

6. Toothed rack according to Claim 5, **characterised in that** on both sides of the toothing (6) at least one weakening (7, 8) or holding edge is provided.

7. Toothed rack according to one of Claims 5 to 6, **characterised in that** at least one weakening (7, 8, 9, 10, 11, 12) and/or holding edge is oriented parallel to the longitudinal axis (2).

8. Toothed rack according to one of Claims 5 to 7, **characterised in that** the teeth (13) of the toothing are oriented at an angle (α), whose value is greater than 30°, with respect to the longitudinal axis (2) of the toothed rack (1).

9. Toothed rack according to one of Claims 5 to 8, **characterised in that** the teeth (13) of the toothing (6) are oriented at an angle (α), whose value is greater than 30°, with respect to at least one weakening (7, 8, 9, 10, 11, 12) or holding edge.

10. Toothed rack according to one of Claims 5 to 9, **characterised in that** at least one weakening (7, 8, 9, 10, 11, 12) or holding edge is arranged on the inner surface (14) of the wall (3).

11. Toothed rack according to one of Claims 5 to 10, **characterised in that** at least one weakening (7, 8, 9, 10, 11, 12) or holding edge is arranged on the outer surface (15) of the wall.

12. Toothed rack according to Claim 11, **characterised in that** on the outer surface (15) of the wall (3), on both sides of the toothing (6), two weakenings (7, 8, 9, 10) each are arranged.

## Revendications

1. Procédé de fabrication d'une section creuse d'une crémaillère (1) ou d'une crémaillère creuse (1), dans lequel un axe longitudinal (2) de la section creuse de la crémaillère (1) s'étend parallèlement à une direction longitudinale (39) et la section creuse de la crémaillère (1) comporte une paroi (3) qui entoure l'axe longitudinal (2) de la crémaillère (1) dans un sens périphérique (4) et présente dans au moins une zone partielle (5) une denture (6), dans lequel un(e) ou plusieurs affaiblissements (7, 8, 9, 10, 11, 12) et/ou arêtes de retenue sont moulés dans la tôle (16) dans le sens périphérique à distance de la denture (6) déjà introduite ou restant à introduire, lesquelles s'étendent par rapport au sens longitudinal (39) de la crémaillère au moins sur une partie de la longueur de la denture déjà introduite ou restant à introduire à côté de celle-ci, **caractérisé en ce que** la section creuse de la crémaillère (1) ou la crémaillère creuse (1) est fabriquée en une tôle plane (16), dans lequel :
- la tôle plane (16) est façonnée dans un premier outil de formage (17, 18) dans un moule en demi-coque ou en U, comprenant deux branches (19, 20) qui sont reliées entre elles par une section de liaison (23) et présentent respectivement une extrémité (21, 22) enlevée de la section de liaison,
- après, en même temps ou avant, la denture (6) est enfoncée dans la tôle (16) et
- après le façonnage de la tôle plane (16) dans un premier outil de formage (17, 18) dans un moule en demi-coque ou en U et après l'enfoncement de la denture (6) dans la tôle (16) et le moulage de l'un(e) ou plusieurs affaiblissements (7, 8, 9, 10, 11, 12) et/ou arêtes de retenue dans la tôle (16) dans une ou plusieurs étapes de formage suivantes, les extrémités (21, 22) des deux branches (19, 20) sont repliées en réalisant un espace creux s'étendant en direction de l'axe longitudinal (2).

2. Procédé selon la revendication 1, **caractérisé en ce qu'**un(e) ou plusieurs des affaiblissements (7-12) et/ou arêtes de retenue sont moulés avant au moins une étape de formage suivante, dans laquelle les extrémités (21, 22) des deux branches (19, 20) sont repliées en réalisant un espace creux s'étendant en direction de l'axe longitudinal (2) et en même temps que l'enfoncement de la denture (6) ou avant celui-ci.

3. Procédé selon la revendication 1 ou 2, **caractérisé en ce qu'**un(e) ou plusieurs affaiblissements (7-12) et/ou arêtes de retenue sont moulés dans la tôle plane.

4. Procédé selon l'une quelconque des revendications 1 à 3, **caractérisé en ce qu'**après les opérations de formage, les deux extrémités (21, 22) des branches sont reliées par soudage.

5. Crémaillère (1) qui est réalisée, au moins par section, creuse et dont l'axe longitudinal s'étend parallèlement à une direction longitudinale (39) et qui comporte dans sa zone creuse une paroi (3) qui entoure l'axe longitudinal (2) de la crémaillère (1) dans un sens périphérique (4) et présente dans au moins une zone partielle (5) une denture (6), dans laquelle au moins un affaiblissement local (7, 8, 9, 10, 11, 12) et/ou une arête de retenue sont réalisés dans la paroi (3) dans le sens périphérique (4) à distance de la denture (6), qui s'étend par rapport à la direction longitudinale (39) de la crémaillère (1) au moins sur une partie de la longueur de la denture (6) à côté de celle-ci, **caractérisée en ce que** la zone creuse de la crémaillère (1) ou la crémaillère (1) creuse est fabriquée en une tôle plane (16) et la denture (6) est enfoncée dans la tôle (16) fabriquée selon le procédé selon l'une quelconque des revendications 1 à 4.

6. Crémaillère selon la revendication 5, **caractérisée en ce qu'**au moins un affaiblissement (7, 8) ou une arête de retenue est prévu(e) de part et d'autre de la denture (6).

7. Crémaillère selon l'une quelconque des revendications 5 à 6, **caractérisée en ce qu'**au moins un affaiblissement (7, 8, 9, 10, 11, 12) et/ou une arête de retenue sont orientés parallèlement à l'axe longitudinal (2).

8. Crémaillère selon l'une quelconque des revendications 5 à 7, **caractérisée en ce que** les dents (13) de la denture sont orientées selon un angle (α), dont la valeur est supérieure à 30 °, par rapport à l'axe longitudinal (2) de la crémaillère (1).

9. Crémaillère selon l'une quelconque des revendications 5 à 8, **caractérisée en ce que** les dents (13) de la denture (6) sont orientées selon un angle (α), dont la valeur est supérieure à 30 °, par rapport à au moins un affaiblissement (7, 8, 9, 10, 11, 12) ou une arête de retenue.

10. Crémaillère selon l'une quelconque des revendications 5 à 9, **caractérisée en ce qu'**au moins un affaiblissement (7, 8, 9, 10, 11, 12) ou une arête de retenue est disposé(e) sur la surface intérieure (14) de la paroi (3).

11. Crémaillère selon l'une quelconque des revendications 5 à 10, **caractérisée en ce qu'**au moins un affaiblissement (7, 8, 9, 10, 11, 12) ou une arête de retenue est disposé(e) sur la surface extérieure (15) de la paroi.

12. Crémaillère selon la revendication 11, **caractérisée en ce que** respectivement deux affaiblissements (7, 8, 9, 10) sont disposés sur la surface extérieure (15) de la paroi (3) de part et d'autre de la denture (6).
